# FASCICULE DE BREVET EUROPEEN

(11) **EP 2 564 385 B1**
(45) Date de publication et mention de la délivrance du brevet: **29.09.2021**
(21) Numéro de dépôt: 11731018.5
(22) Date de dépôt: 18.04.2011
(51) Int. Cl.: G10K 11/178, B64C 1/40, B64C 7/02, B64D 33/02

(54) **PROCÉDÉ DE TRAITEMENT DES ONDES ACOUSTIQUES ÉMISES EN SORTIE D'UN TURBOMOTEUR D'UN AÉRONEF AVEC UN DISUPOSITIF À DÉCHARGE À BARRIÈRE DIÉLECTRIQUE ET AÉRONEF COMPRENANT UN TEL DISUPOSITIF**
VERFAHREN ZUR VERARBEITUNG VON SCHALLWELLEN AUS DEM AUSLASS EINES TURBOMOTORS EINES FLUGZEUGES MIT EINER DIELEKTRISCH BEHINDERTEN ENTLADUNGSVORRICHTUNG UND FLUGZEUG MIT EINER DERARTIGEN VORRICHTUNG
METHOD OF PROCESSING ACOUSTIC WAVES EMITTED AT THE OUTLET OF A TURBO ENGINE OF AN AIRCRAFT WITH A DIELECTRIC-BARRIER DISCHARGE DEVICE AND AIRCRAFT COMPRISING SUCH A DEVICE

(30) Priorité: 27.04.2010 FR 1053221
(43) Date de publication de la demande: 06.03.2013
(73) Titulaire: Safran Aircraft Engines, 75015 Paris (FR)
(72) Inventeur: VUILLEMIN, Alexandre, Alfred, Gaston, Bardon QLD 4065 (AU)
(74) Mandataire: Gevers & Orès
(86) Numéro de dépôt international: PCT/FR2011/050886
(87) Numéro de publication internationale: WO 2011/135229

(56) Documents cités:
- EP-A2- 1 995 172
- WO-A2-98/39209
- WO-A2-2007/106863
- US-A- 3 685 610
- US-A- 5 919 029
- US-A1- 2007 107 414
- US-A1- 2007 241 229
- US-B1- 7 380 756
- US-B1- 7 624 941
- BASTIEN F: "Acoustics and gas discharges: applications to loudspeakers", JOURNAL OF PHYSICS D (APPLIED PHYSICS), vol. 20, no. 12, 14 décembre 1987 (1987-12-14), pages 1547-1557, XP002613460, UK ISSN: 0022-3727, DOI: 10.1088/0022-3727/20/12/001

## Description

Le domaine de la présente invention est celui de l'aéronautique civile et en particulier, celui de la génération de bruit par les avions.

Le bruit généré par les avions civils, notamment au décollage, est une nuisance largement connue et de nombreuses innovations ont été imaginées pour tenter de le réduire. Une des principales sources de ce bruit réside dans le jet des moteurs, qui sont utilisés à leur pleine puissance lors de la phase de décollage. Des travaux importants ont bien évidemment été conduits pour tenter de réduire le bruit du jet des réacteurs, comme par exemple des chevrons en formes en dents de scie pour la tuyère d'éjection, que ce soit pour celle des gaz chauds, en provenance du flux primaire du réacteur, ou celle des gaz dits froids qui sont issus du flux secondaire du moteur.

Pour limiter les nuisances subies par les riverains des aéroports, des normes strictes ont été imposées, qui limitent le bruit que l'on peut percevoir en divers points situés autour de l'avion, à différentes distances et dans plusieurs directions par rapport à la piste d'envol.

Un des points particulièrement critiques à respecter par les concepteurs d'avions, en termes de bruit maximal admissible pour obtenir la certification d'un avion, se trouve dans une position latérale par rapport à l'avion, à une distance de 450 m de la piste de décollage. La présence du pylône, c'est-à-dire du mât qui supporte le moteur en le rattachant à l'aile, génère localement, au niveau de l'éjection des gaz, des niveaux élevés de turbulence dans l'écoulement, avec pour conséquence une augmentation très significative du bruit latéral du moteur. Ce phénomène est particulièrement aigu pour les configurations où le pylône est proéminent au-delà du plan d'éjection des gaz, ce qui devient une configuration très fréquente sur les avions civils récents.

Les résultats de calculs numériques ou de mesures réalisées sur maquette en soufflerie, montrent bien que les effets d'interactions entre le flux circulant autour du pylône et le pylône lui-même génèrent une augmentation notable des niveaux de turbulence et par suite, du niveau de bruit. Une modification importante du développement angulaire du jet radialement autour du pylône peut également être notée, qui tend à orienter le jet du réacteur autour du pylône, en direction de l'aile.

Par ailleurs, l'expérience acquise montre que l'introduction du pylône, outre son influence sur l'augmentation du niveau sonore sur une configuration d'éjection conventionnelle, peut également réduire considérablement l'efficacité d'autres dispositifs installés pour réduire le bruit des gaz d'échappement, tels que des chevrons ou des mélangeurs installés sur les tuyères.

La présence du pylône introduit ainsi, en termes d'acoustique, un accroissement du bruit d'éjection au point latéral de certification, qui peut varier entre 2 à 3,5 EPNdB (Effective Perceived Noise, ou niveau de bruit effectivement perçu, en décibels) selon le cycle moteur, la taille du pylône et les géométries d'éjection considérées. Les turbulences forment de petites structures tourbillonnaires qui grossissent et rayonnent hors du turbomoteur à basse fréquence et engendrent du bruit.

Le besoin de réduire le bruit de jet étant un souci constant des motoristes on voit bien l'intérêt qu'il y a à réduire le bruit à la source, c'est-à-dire en agissant sur les écoulements turbulents locaux autour du pylône. Le potentiel de réduction de bruit apparaît même, in fine, plus important que celui apporté par la mise en œuvre de chevrons ou de micro-jets à la périphérie de la tuyère.

L'état de la technique est constitué des documents US-7.624.941-B1, US-2007/107.414-A1, WO 2007/106.863-A2, US-7.380.756-B1, EP-1.995.172-A2, US-20072410229-A1 et WO-98/39209-A2.

Le document US-7.624.941-B1 décrit l'atténuation du bruit sur une surface de contrôle d'un missile au moyen d'un actionneur plasma et ne concerne pas le réduction du bruit de son moteur.

Le document US-2007/107.414-A1 décrit un dispositif destiné à dévier mécaniquement au moyen d'un volet l'écoulement de l'air sur un pylône sustentateur d'une turbomachine.

Le document WO-2007/106.863-A2 décrit un dispositif à décharge à barrière diélectrique destiné à atténuer le bruit de l'écoulement autour d'un train d'atterrissage d'aéronef et ne concerne pas le réduction du bruit de son moteur.

Le document US-7.380.756-B1 décrit plus généralement un dispositif à décharge à barrière diélectrique destiné à atténuer le bruit de l'écoulement sur une surface quelconque.

Le document EP-1.995.172-A2 décrit l'atténuation du bruit autour d'une baie d'armement d'un aéronef militaire au moyen d'un actionneur plasma et ne concerne pas le réduction du bruit de son moteur.

Le document US-2007/241229-A1 décrit un dispositif de déviation de la couche limite sur le fuselage d'un aéronef en amont de l'alimentation en air de son moteur afin d'accroitre le rendement du moteur, au moyen d'un dispositif à décharge à barrière diélectrique.

Le document WO-98/39209-A2 décrit un dispositif de réduction ou de réduction des ondes acoustiques du flux ionisé sortant d'une turbomachine à l'aide d'un moyen de couplage électrique émettant une onde sonore inverse des ondes sonores émises par cette turbomachine.

A la différence de ces solutions, afin d'éliminer au moins certains des inconvénients précités, l'invention concerne un procédé, selon la revendication 1, de traitement des ondes acoustiques émises en sortie d'un turbomoteur d'un aéronef, ce turbomoteur étant solidarisé à une aile dudit aéronef par l'intermédiaire d'un pylône, l'aéronef comprenant un dispositif à décharge à barrière diélectrique intégré à une surface inférieure de ladite aile, rapporté sur la dite aile ou monté sur ledit pylône, caractérisé en ce qu'au cours du procédé on active ledit dispositif pour générer une décharge qui ionise l'air ambiant à la surface dudit dispositif à décharge à barrière diélectrique, ledit air ionisé induisant un vent électrique en direction des ondes acoustiques de manière à les atténuer.

Grâce au procédé selon l'invention, on contrôle l'émission du vent électrique via le dispositif à décharge à barrière diélectrique. Le vent électrique émis interagit avec les ondes acoustiques du moteur ce qui a pour effet de les atténuer. Un dispositif à décharge à barrière diélectrique présente l'avantage de pouvoir être commandé de manière active pour réguler le bruit issu du turbomoteur, le dispositif étant allumé au décollage et éteint en vol.

Par nature, l'activation du dispositif à décharge à barrière diélectrique entraîne une ionisation de l'air ambiant et induit, du fait de la force de Coulomb, un écoulement par transfert de quantité de mouvement. Cet écoulement est connu sous la désignation vent électrique.

Le vent électrique interagit avec les structures turbulentes formées par les ondes acoustiques en contact avec l'aéronef, le vent électrique empêchant les structures turbulentes de grossir et de générer un bruit basse fréquence, caractéristique du bruit du jet.

Pour un moteur monté sur une aile via un pylône, le dispositif à décharge à barrière diélectrique améliore la couche de cisaillement du flux d'éjection qui entre en contact avec le pylône en atténuant l'amplitude des ondes acoustiques émises par le turbomoteur.

L'invention concerne également un aéronef, selon la revendication 2, pour la mise en œuvre du procédé selon la revendication 1, comprenant au moins un turbomoteur solidarisé à une aile dudit aéronef par l'intermédiaire d'un pylône et émettant en sortie des ondes acoustiques, et un dispositif à décharge à barrière diélectrique intégré sur une surface inférieure de ladite aile, rapporté sur ladite aile, ou monté sur ledit pylône, caractérisé en ce qu'il est configuré pour ioniser l'air ambiant à une surface dudit dispositif à décharge à barrière diélectrique, ledit air ionisé induisant un vent électrique en direction des ondes acoustiques de manière à les atténuer.

De préférence, le dispositif à décharge à barrière diélectrique est positionné axialement en aval du turbomoteur. Cela permet avantageusement d'atténuer directement les ondes acoustiques issues du moteur.

De préférence encore, le turbomoteur comportant une section d'éjection primaire et une section d'éjection secondaire, le dispositif à décharge à barrière diélectrique est positionné axialement en aval de la section d'éjection secondaire. Les ondes acoustiques liées au pylône sont alors fortement atténuées.

De préférence, le dispositif à décharge à barrière diélectrique comprend une première électrode haute tension et une deuxième électrode reliée à la masse qui sont séparées par un milieu diélectrique.

Selon un aspect de l'invention, le dispositif à décharge à barrière diélectrique est monté sur ladite aile. Ainsi, le dispositif permet d'atténuer les ondes acoustiques d'un turbomoteur qui est monté sur l'aile. L'atténuation étant réalisée à proximité de la source de bruit, la réduction du bruit est importante. De préférence, le dispositif est intégré en aval du moteur.

De préférence, l'aile comprenant une surface supérieure et une surface inférieure, l'aile comprenant des moyens de fixation, reliant le turbomoteur à ladite aile, disposés sur une desdites surfaces, le dispositif à décharge à barrière diélectrique est monté sur la surface de l'aile sur laquelle sont disposés les moyens de fixation. Le dispositif à décharge à barrière diélectrique est monté en regard du turbomoteur ce qui permet d'atténuer de manière directe les ondes acoustiques, à proximité de la source de bruit. Lorsque les ondes acoustiques émises par le moteur entrent en contact avec la surface de l'aile, le dispositif à décharge à barrière diélectrique émet un vent électrique ce qui atténue l'amplitude desdites ondes acoustiques.

De préférence toujours, le dispositif à décharge à barrière diélectrique est intégré à ladite aile de manière à ce que la surface externe de l'aile soit continue. De manière avantageuse, l'intégration du dispositif à décharge à barrière diélectrique ne modifie pas les dimensions de l'aile qui conserve ainsi ses propriétés aérodynamiques.

Selon un autre aspect de l'invention, l'aéronef comprenant au moins une aile et un pylône reliant le turbomoteur à ladite aile, le dispositif à décharge à barrière diélectrique est monté sur le pylône.

D'autres caractéristiques et avantages de l'invention apparaîtront lors de la description qui suit faite en regard des figures annexées données à titre d'exemples non limitatifs.
La figure 1 est une représentation en perspective schématique d'un aéronef selon l'invention dans lequel un dispositif à décharge à barrière diélectrique est intégré à la surface inférieure de l'aile.
La figure 2 est une vue en coupe schématique d'un dispositif à décharge à barrière diélectrique selon l'invention.
La figure 3 est une vue en coupe schématique d'une aile d'un aéronef selon l'invention dans lequel un dispositif à décharge à barrière diélectrique est intégré à la surface inférieure d'une aile de l'aéronef.

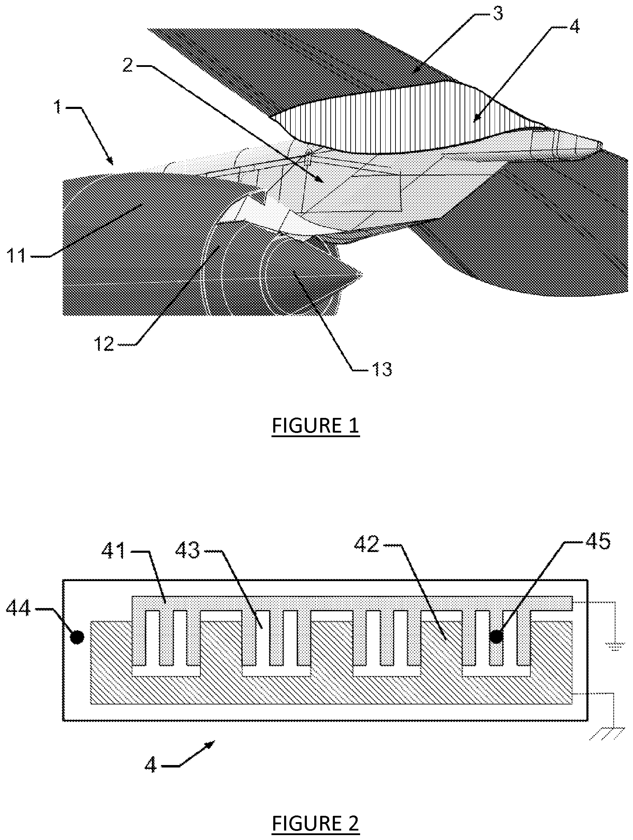

Un turbomoteur 1 à double flux dans lequel s'échappent en sortie du turbomoteur un flux d'air primaire, ou flux chaud, et un flux secondaire, ou flux froid, est représenté en référence à la figure 1. En particulier, le turbomoteur 1 comporte un capotage extérieur de la veine du flux secondaire 11, un capotage extérieur de la veine du flux primaire 12, et un cône d'échappement 13. Ce dernier délimite avec le capotage extérieur de la veine du flux primaire 12, la tuyère de flux primaire. La veine du flux secondaire est ménagée entre le capotage extérieur de la veine du flux secondaire 11 et le capotage extérieur de la veine du flux primaire 12, et débouche dans la tuyère secondaire.

Le turbomoteur 1 est solidarisé à une aile 3 d'un aéronef par l'intermédiaire d'un pylône 2 de support du turbomoteur 1 qui est ici monobloc. En référence à la figure 1, le pylône s'étend longitudinalement d'amont en aval selon l'axe du turbomoteur et comprend une partie supérieure de fixation à l'aile 3 de l'aéronef et une partie inférieure fixation au turbomoteur 1, ladite partie de fixation à l'aéronef étant en aval de la partie de fixation au turbomoteur.

Comme représenté sur la figure 1, le turbomoteur 1 est monté en amont de l'aile 3 de l'aéronef, la surface inférieure de la partie amont du pylône 2 comprend des moyens de fixation au turbomoteur, du type ferrure et bielle, qui sont connus de l'homme du métier. De même, la surface supérieure de la partie aval du pylône 2 comprend des moyens de fixation à l'aile 3, du type ferrure et bielle, qui sont connus de l'homme du métier.

Selon l'invention, l'aile 3 de l'aéronef comporte un dispositif à décharge à barrière diélectrique 4 configuré pour émettre un vent électrique de manière à atténuer les ondes acoustiques.

A titre d'exemple, en référence à la figure 2, le dispositif à décharge à barrière diélectrique 4 se présente globalement sous la forme d'une plaque rectangulaire comprenant une première électrode haute tension 41 et une deuxième électrode 42, reliée ici à la masse, qui sont séparées par un milieu diélectrique 43 pour générer une décharge qui ionise l'air ambiant à la surface du dispositif 4. Cette ionisation de l'air, du fait de la force de Coulomb, induit un écoulement appelé vent électrique par transfert de quantité de mouvement. Le dispositif à décharge à barrière diélectrique 4 permet de contrôler l'écoulement autour d'un profil aérodynamique. Le dispositif à décharge à barrière diélectrique 4 est également dénommé actionneur plasma.

Le dispositif à décharge à barrière diélectrique 4 est alimenté par un courant dont l'intensité est variable. En commandant les caractéristiques du courant d'alimentation (pulsation, amplitude, etc.), on commande les caractéristiques du vent électrique émis par le dispositif à décharge à barrière diélectrique 4. Le vent électrique permet de modifier l'écoulement à proximité du dispositif pour favoriser, soit le processus de recollement, soit le processus de décollement de la couche limite. Ainsi, le vent électrique interagit avec les structures turbulentes formées par les ondes acoustiques en contact avec le pylône ou une aile de l'aéronef, le vent électrique empêchant les structures turbulentes de grossir et de générer un bruit basse fréquence, caractéristique du bruit du jet.

En référence à la figure 2, le dispositif à décharge à barrière diélectrique 4 comprend en outre des capteurs de pression 44, 45, adaptés pour mesurer la pression des écoulements à la surface du dispositif 4. Grâce aux capteurs 45, 46, le dispositif à décharge à barrière diélectrique 4 permet de réguler la formation du vent électrique (intensité, etc.) en fonction de l'écoulement mesuré. Les processus de recollement et de décollement de la couche limite peuvent être asservis en fonction de l'écoulement mesuré.

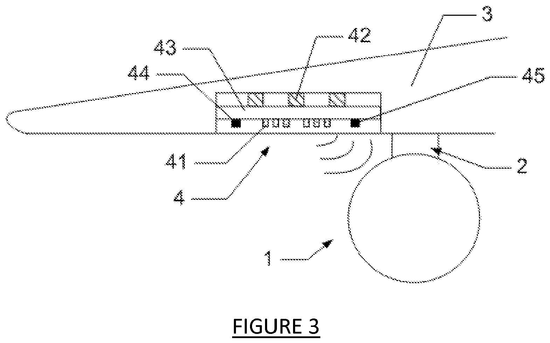

En référence aux figures 1 et 3, le dispositif à décharge à barrière diélectrique 4 est intégré à la surface inférieure de l'aile 3 de l'aéronef de manière à atténuer les ondes acoustiques émises par le moteur 1 monté sous l'aile 3. Le dispositif à décharge à barrière diélectrique 4 est ici intégré à ladite aile 3 de manière à ce que la surface externe de l'aile 3 soit continue. Autrement dit, en référence à la figure 3, une cavité est ménagée dans l'aile 3 de manière accueillir le dispositif à décharge à barrière diélectrique 4 afin que la surface externe du dispositif 4 soit continue avec la surface externe de l'aile 3 de manière à conserver les propriétés aérodynamiques de l'aile 3.

Le dispositif à décharge à barrière diélectrique 4 est, dans cet exemple, intégré à l'aile 3 mais il va de soit qu'il pourrait également être rapporté sur ladite aile 3.

Le dispositif à décharge à barrière diélectrique 4 peut comprendre une pluralité d'électrodes 41, 42 dont les dimensions, la surface et l'agencement sont fonction de l'emplacement du dispositif sur l'aéronef.

De même, le courant électrique appliqué au dispositif à décharge à barrière diélectrique 4 peut varier de manière à former le vent électrique désiré.

Selon une forme de réalisation préférée, le dispositif à décharge à barrière diélectrique est configuré pour émettre des vents électriques qui sont déphasés les uns par rapport aux autres de manière à atténuer les ondes acoustiques sur une large bande de fréquences.

En émettant des vents électriques, on limite la formation de turbulences issues du turbomoteur qui grossissent lors de leur circulation en aval. On protège alors efficacement l'aéronef contre les turbulences, une source de bruit importante étant supprimée.

Selon une forme de réalisation non représentée, le dispositif à décharge à barrière diélectrique 4 est monté sur le pylône 2 de l'aéronef de manière à atténuer les ondes acoustiques issues du moteur. L'influence du pylône 2 sur le bruit généré est alors directement limitée. On protège ainsi de manière localisée les zones susceptibles de générer du bruit par interaction avec le flux d'éjection du turbomoteur sans affecter les performances aérodynamiques du moteur. Il va de soi que le dispositif à décharge à barrière diélectrique 4 pourrait être directement intégré au pylône 2 de manière à ce que la surface externe du pylône soit continue.

De préférence, le dispositif à décharge à barrière diélectrique 4 est allumé au décollage de manière à atténuer le bruit du turbomoteur afin que le niveau de bruit émis respecte les normes en vigueur. De préférence encore, pour limiter la consommation d'énergie, le dispositif à décharge à barrière diélectrique 4 est éteint en vol, plus particulièrement, en régime de croisière.

## Revendications

1. Procédé de traitement des ondes acoustiques émises en sortie d'un turbomoteur (1) d'un aéronef, ce turbomoteur étant solidarisé à une aile (3) dudit aéronef par l'intermédiaire d'un pylône, l'aéronef comprenant un dispositif à décharge à barrière diélectrique (4) intégré à une surface inférieure de ladite aile, rapporté sur ladite aile, ou monté sur ledit pylône, ledit dispositif à décharge à barrière diélectrique comprenant une première électrode à haute tension (41) et une deuxième électrode (42) reliée à une masse et séparées par un milieu diélectrique (43), **caractérisé en ce qu'**au cours du procédé on active ledit dispositif (4) pour générer une décharge qui ionise l'air ambiant à une surface dudit dispositif (4) à décharge à barrière diélectrique (4), ledit air ionisé induisant un vent électrique en direction des ondes acoustiques de manière à les atténuer.

2. Aéronef, pour la mise en œuvre du procédé selon la revendication 1, comprenant au moins un turbomoteur (1) solidarisé à une aile (3) dudit aéronef par l'intermédiaire d'un pylône et émettant en sortie des ondes acoustiques, et un dispositif à décharge à barrière diélectrique (4) intégré à une surface inférieure de ladite aile, rapporté sur ladite aile, ou monté sur ledit pylône, ledit dispositif à décharge à barrière diélectrique comprenant une première électrode à haute tension (41) et une deuxième électrode (42) reliée à une masse et séparées par un milieu diélectrique (43), **caractérisé en ce qu'**il est configuré pour ioniser l'air ambiant à une surface dudit dispositif (4), ledit air ionisé induisant un vent électrique en direction des ondes acoustiques de manière à les atténuer.

3. Aéronef selon la revendication 2 **caractérisé en ce que**, l'aile (3) comprenant une surface supérieure et une surface inférieure, l'aile (3) comprenant des moyens de fixation (2), reliant le turbomoteur à ladite aile (3), disposés sur une desdites surfaces, le dispositif à décharge à barrière diélectrique (4) est monté sur la surface de l'aile (3) sur laquelle sont disposés les moyens de fixation (2).

4. Aéronef selon l'une des revendications 2 à 3 **caractérisé en ce que**, le dispositif à décharge à barrière diélectrique (4) est intégré à ladite aile (3) de manière à ce que la surface externe de l'aile (3) soit continue.

5. Aéronef selon l'une des revendications 2 à 4, **caractérisé en ce que** le dispositif à décharge à barrière diélectrique (4) est positionné axialement en aval du turbomoteur (1).

6. Aéronef selon la revendication 5 **caractérisé en ce que**, le turbomoteur (1) comportant une section d'éjection primaire et une section d'éjection secondaire, le dispositif à décharge à barrière diélectrique (4) est positionné axialement en aval de la section d'éjection secondaire.

## Patentansprüche

1. Behandlungsverfahren von Schallwellen, die am Ausgang eines Turbomotors (1) eines Luftfahrzeugs abgegeben werden, wobei dieser Turbomotor über einen Pylon fest mit einem Flügel (3) des Luftfahrzeugs verbunden ist, wobei das Luftfahrzeug eine Entladevorrichtung mit dielektrischer Barriere (4) umfasst, die auf einer unteren Oberfläche des Flügels integriert, auf dem Flügel angebaut oder auf dem Pylon montiert ist, wobei die Entladevorrichtung mit dielektrischer Barriere eine erste Hochspannungselektrode (41) und eine zweite Elektrode (42), die mit einer Masse verbunden ist, und die von einem dielektrischen Milieu (43) getrennt sind, umfasst,
**dadurch gekennzeichnet, dass** im Laufe des Verfahrens die Vorrichtung (4) aktiviert wird, um eine Entladung zu erzeugen, die die Umgebungsluft an einer Oberfläche der Entladevorrichtung (4) mit dielektrischer Barriere ionisiert, wobei die ionisierte Luft einen elektrischen Wind in Richtung der Schallwellen auf eine Weise induziert, um sie zu dämpfen.

2. Luftfahrzeug zur Umsetzung des Verfahrens nach Anspruch 1, das mindestens einen Turbomotor (1) umfasst, der über einen Pylon fest mit einem Flügel (3) des Luftfahrzeugs verbunden ist und am Ausgang Schallwellen abgibt, und eine Entladevorrichtung mit dielektrischer Barriere (4), die an einer unteren Oberfläche des Flügels integriert, auf dem Flügel angebaut oder auf dem Pylon montiert ist, wobei die Entladevorrichtung mit dielektrischer Barriere eine erste Hochspannungselektrode (41) und eine zweite Elektrode (42), die mit einer Masse verbunden ist, und die von einem dielektrischen Milieu (43) getrennt sind, umfasst,
**dadurch gekennzeichnet, dass** es zum Ionisieren der Umgebungsluft an einer Oberfläche der Vorrichtung (4) konfiguriert ist, wobei die ionisierte Luft einen elektrischen Wind in Richtung der Schallwellen auf eine Weise induziert, um sie zu dämpfen.

3. Luftfahrzeug nach Anspruch 2, **dadurch gekennzeichnet, dass** der Flügel (3) eine obere Oberfläche und eine untere Oberfläche umfasst, wobei der Flügel (3) Befestigungsmittel (2) umfasst, die den Turbomotor mit dem Flügel (3) verbinden, die auf einer der Oberflächen angeordnet sind, wobei die Entladevorrichtung mit dielektrischer Barriere (4) auf der Oberfläche des Flügels (3), auf der die Befestigungsmittel (2) angeordnet sind, montiert ist.

4. Luftfahrzeug nach einem der Ansprüche 2 bis 3, **dadurch gekennzeichnet, dass** die Entladevorrichtung mit dielektrischer Barriere (4) in den Flügel (3) auf eine Weise integriert ist, damit die Außenoberfläche des Flügels (3) durchgehend ist.

5. Luftfahrzeug nach einem der Ansprüche 2 bis 4, **dadurch gekennzeichnet, dass** die Entladevorrichtung mit dielektrischer Barriere (4) axial stromabwärts des Turbomotors (1) positioniert ist.

6. Luftfahrzeug nach Anspruch 5, **dadurch gekennzeichnet, dass** der Turbomotor (1) einen Primärauswurfabschnitt und einen Sekundärauswurfabschnitt umfasst, wobei die Entladevorrichtung mit dielektrischer Barriere (4) axial stromabwärts des Sekundärauswurfabschnitts positioniert ist.

## Claims

1. Method of processing acoustic waves emitted at the outlet of a turboshaft engine (1) of an aircraft, this turboshaft engine being secured to a wing (3) of said aircraft by means of a pylon, the aircraft comprising a dielectric barrier discharge device (4) integrated into a lower surface of said wing, attached to said wing, or mounted on said pylon, said dielectric barrier discharge device comprising a first high voltage electrode (41) and a second electrode (42) connected to a ground and separated by a dielectric medium (43),
**characterised in that** during the method said device (4) is activated to generate a discharge which ionises ambient air on a surface of said dielectric barrier discharge device (4), said ionised air inducing an electric wind in the direction of acoustic waves so as to attenuate them.

2. Aircraft, for the implementation of the method according to claim 1, comprising at least one turboshaft engine (1) secured to a wing (3) of said aircraft by means of a pylon and emitting acoustic waves at the output, and a dielectric barrier discharge device (4) integrated into a lower surface of said wing, attached to said wing, or mounted on said pylon, said dielectric barrier discharge device comprising a first high voltage electrode (41) and a second electrode (42) connected to a ground and separated by a dielectric medium (43),
**characterised in that** it is configured to ionise ambient air at a surface of said device (4), said ionised air inducing an electric wind in the direction of the acoustic waves in such a way to attenuate them.

3. Aircraft according to claim 2, **characterised in that**, the wing (3) comprising an upper surface and a lower surface, the wing (3) comprising attachment means (2) connecting the turboshaft engine to said wing (3), disposed on one of said surfaces, the dielectric barrier discharge device (4) is mounted on the surface of the wing (3) on which the attachment means (2) are disposed.

4. Aircraft according to any one of claims 2 to 3 **characterised in that**, the dielectric barrier discharge device (4) is integrated with said wing (3) in such a way that the outer surface of the wing (3) is continuous.

5. Aircraft according to any one of claims 2 to 4, **characterised in that** the dielectric barrier discharge device (4) is positioned axially downstream of the turboshaft engine (1).

6. Aircraft according to claim 5, **characterised in that**, the turboshaft engine (1) comprising a primary ejection section and a secondary ejection section, the dielectric barrier discharge device (4) is positioned axially downstream of the secondary ejection section.
